(19) Europäisches Patentamt
European Patent Office
Office européen des brevets

(11) EP 0 700 574 B1

(12) **EUROPEAN PATENT SPECIFICATION**

(45) Date of publication and mention
of the grant of the patent:
**30.07.1997 Bulletin 1997/31**

(51) Int Cl.6: **H01F 38/14**, H02J 5/00,
H02J 7/02, H02M 3/28

(21) Application number: **94915615.2**

(22) Date of filing: **19.05.1994**

(86) International application number:
**PCT/GB94/01068**

(87) International publication number:
**WO 94/28560 (08.12.1994 Gazette 1994/27)**

(54) **POWER COUPLING**

LEISTUNGSKOPPELUNG

COUPLAGE DE PUISSANCE

(84) Designated Contracting States:
**BE DE FR GB IT**

(30) Priority: **21.05.1993 GB 9310545**

(43) Date of publication of application:
**13.03.1996 Bulletin 1996/11**

(73) Proprietor: **ERA PATENTS LIMITED**
**Leatherhead Surrey KT22 7SA (GB)**

(72) Inventors:
• **PEDDER, Donald, Austin, Grant**
**Surrey KT12 1LE (GB)**

• **SKINNER, Andrew, John**
**Farnborough GU14 0PR (GB)**

(74) Representative: **Rackham, Stephen Neil et al**
**GILL JENNINGS & EVERY,**
**Broadgate House,**
**7 Eldon Street**
**London EC2M 7LH (GB)**

(56) References cited:
EP-A- 0 540 750          WO-A-92/17929
FR-A- 2 618 618          US-A- 5 157 319

## Description

The present invention relates to a system for coupling electrical power from a source to a load.

Commonly, electrical equipment is connected to a power source by means of a plug and socket or by other arrangements involving direct physical contact between conductors, as in, for example, a domestic light fitting.

There are a number of situations in which the use of these conventional power coupling systems is inappropriate. In medical electronics, the need to ensure the safety of patients connected to the equipment often makes it undesirable that there should be a direct connection from equipment to the mains. In hazardous areas such as mines, oil refineries and chemical plants, there are considerable risks associated with the possibility of sparks occurring as contact is made. Even in domestic settings such as the kitchen or bathroom, the presence of water makes the use of conventional plugs and sockets potentially hazardous.

Non-contact energy transfer systems are known, for example in WO-A-92/17929 and EP-A-0540750. WO-A-92/17929 discloses a non-contact system by which a pick-up coil on a vehicle derives power from two linear conductors provided on a track. The resonance of the linear conductors is maintained at a fixed level. FR-A-2618618 disclosed on of a number of systems incorporating a phase-locked loop circuit for control of a resonant frequency.

According to a first aspect of the present invention, a power coupling system comprises a source unit arranged to be connected to a power supply and including a first winding and a load unit including a second winding, in use power being inductively coupled from the first winding to the second winding, and the source unit and load unit being readily separable, characterised in that a variable tuning circuit arranged to control the frequency of the voltage applied to the first winding in dependence upon the resonant frequency of the load circuit including the secondary winding leakage inductance, so that an AC voltage applied to the first winding (P) is tuned to the said resonant frequency of the load circuit.

The power supply system of the present invention replaces conventional direct conduction of current from the source to the load by inductive coupling between a primary winding connected to the source, and a secondary winding connected to the load. The primary and secondary windings are not formed around a common core as in a conventional transformer, but are located in physically separable units and power is inductively coupled across an air-gap. Since there is no requirement for a direct physical connection, the different units can be entirely encapsulated, making the system safe for use in hazardous environments such as those discussed above.

It has previously been suggested, in a few specialised fields of application, to use inductive coupling of a power source to a load. For example, it has been proposed to provide a charger for an electric vehicle in which a primary winding in the charging unit is brought into the proximity of a secondary winding of a circuit connected to the vehicle batteries. The system operates at the mains frequency of 50 Hz. However, such systems suffer a number of serious limitations and so hitherto have not found wide acceptance. By comparison with conventional transformers in which the two windings are formed on a common core, the amount of flux leakage is greatly increased and so the efficiency with which power is coupled across the system is very poor. In practice, therefore, such systems have only been used where the power requirement of the load is small.

The present invention overcomes these disadvantages to provide a power coupling system of sufficiently high efficiency to be of use in a wide range of applications. This achieved by providing in the source unit a control circuit arranged to drive the primary winding at a frequency substantially matched to the resonant frequency of the load circuit including the secondary winding leakage inductance. Operation in this manner provides power coupling with high efficiency despite the presence of significant leakage inductances. At the same time, the relatively high frequencies involved makes it possible to reduce the size of the windings to the extent that a load unit can readily be accommodated within many otherwise conventional items of electrical equipment. Because it relies upon tuning to a resonant frequency within a certain range, a system embodying the present invention will not in general couple power, e.g., to a metal object which accidentally comes into contact with the source. The system therefore offers improved safety.

Preferably the control means include a detector responsive to the phase difference between voltage and current in the source circuit or between the source unit voltage and the load unit current as referred to the source unit and arranged to produce a control output dependent on that difference.

Preferably the source unit includes an inverter switched at a frequency determined by the control means.

Using the system of the preferred aspects of the present invention, as the load unit is brought nearer the source unit the load impedance is reflected into the source circuit, reducing the phase difference between voltage and current in that circuit. A phase comparator detects this change and in response to it changes the operating frequency of the inverter so that it becomes closer to the load circuit resonant frequency. As a result, the load circuit driving impedance is reduced, as the frequency of the inverter approaches the resonant frequency of the load circuit.

Preferably the control circuit is arranged to drive the primary circuit at a high frequency in the absence of a load, and to reduce the operating frequency of the inverter as the load approaches. With no load present operating at high frequency, the primary reactance is high resulting in low primary current and low resultant magnetic field strength.

This control arrangement can adjust the operation of the inverter to suit a wide range of load impedances and air

gaps. When the source unit has "acquired" the load unit it will operate with air gaps of 0 to about 10% of the total magnetic path length. Circuit efficiency is high when operating in this resonant mode, and with appropriate design of the magnetic core components, stray magnetic fields can be reduced to acceptable levels both when the load unit is present and absent. When no load is present the primary current is small.

Preferably the load winding is formed on a core having a re-entrant portion and the source winding is formed on a core having at least a portion which in use locates in the re-entrant portion of the load core as the load and source are brought together.

Possible applications for the power transfer system include emergency lighting in hazardous areas, plug-in lighting systems for such areas, rechargeable lanterns and torches for marine and industrial use and lanterns or emergency lamps for domestic use, and ultra low leakage power supplies for electronic equipment in, e.g., medical applications. In the case of lighting, luminaries incorporating a non-contact power supply system can be re-lamped without it being necessary for the entire power system to be shut down. The power transfer system is also of particular value in enabling isolation from the effects of large supply transients and common-mode effects which are common, for example, in electric railways.

The systems embodying the present invention are particularly useful in enabling the coupling of both power and data between units which move with respect to each other. Such a system may be used, for example, with a button or other equipment mounted on a sliding door. Another important field is in the use of transducers mounted in a rotating wheel or a rotating turbine. Systems embodying the present invention facilitate the transmission of electrical power from a fixed power supply to the load unit which is mounted with the rotating transducer inside the wheel or turbine.

As will be described in further detail below, power coupling systems embodying the present invention can readily be adapted for the transmission of data using frequency-shift keying techniques without disturbing the transmission of power.

According to a second aspect of the present invention, there is provided a method of coupling power inductively from a source to a load characterised by bringing separable respective source and load units into proximity, the load unit including a winding connected in a resonant circuit, and driving the source at a frequency substantially matched to the resonance frequency of the load, including the load winding leakage inductance.

BRIEF DESCRIPTION OF THE DRAWINGS

A system in accordance with the present invention will now be described in further detail with reference to the accompanying drawings, in which:

Figure 1 is a simplified circuit diagram;
Figure 2 is a diagram showing a rechargeable lantern incorporating the circuit of Figure 1;
Figure 3 is a diagram showing a lumped-circuit model of the transformer;
Figure 4 shows the control characteristic in a first embodiment;
Figure 5i and 5ii shows a current monitoring circuit for a third embodiment;
Figure 6 shows current waveforms for the circuit of Figure 5i and 5ii;
Figure 7 shows the control characteristics of a second embodiment; and
Figure 8a is a schematic a bridge inverter for use in a source unit and Figures 8bi,8bii and 8ci-8civ are detailed circuit diagrams;
Figures 9a to 9d show different alternative configurations for the cores and windings in the source and load units;
Figure 10 is a circuit diagram of a load unit adapted for transmitting a simple logic signal;
Figure 11 is a circuit diagram of a load unit adapted for a continuous data transmission;
Figure 12 is a diagram showing schematically a power coupling system for use underwater; and
Figure 13 is a diagram showing schematically a source and load unit used to provide a power connection to a wheelchair battery charger.

DESCRIPTION OF EXAMPLES

A power coupling system comprises a source unit 1 and a load unit 2, each of which is normally contained within a separate housing. The load unit may, for example, be incorporated in the base of a housing of a rechargeable electric lantern L. The source unit 1 in this case is located in the housing of a charging unit for the lantern.

The source unit comprises a primary winding 3 formed on an associated core 4. The winding is driven via a half-bridge inverter 5. Alternatively, for circuits handling higher power levels, a full bridge inverter may be used. A control circuit 6 including a current monitor CM and phase comparator 7 controls the frequency of switching of the inverter 5. The phase comparator employs exclusive-OR logic devices to provide an output which, after filtering, increases linearly from 0 as the phase difference between the input signals arises. Phase comparison might alternatively be carried out using other logic devices in an equivalent circuit, or integrated circuits such as phase-lock loops. An appropriate device of this latter sort is device 74HC4046A from the standard 74 Series Logic family. The control circuit may be constructed using conventional discrete logic and linear components, or alternatively may be formed as an ASIC, or a thick film hybrid assembly.

The load unit 2 includes a secondary winding 8 on an associated core 9, together with a rectifier and any further smoothing and regulating circuitry required by the particular load. A series resonating capacitor CR is connected between the secondary winding and the output circuitry.

As will be described in further detail below, the reactance of the resonating capacitor, in conjunction with the leakage inductance and any load inductances associated with the secondary winding creates a resonant circuit. The control circuit 5 in the source unit is effective to control the frequency of the source so that it generally corresponds to the resonant frequency of the load circuit. The frequency of operation of the source will typically be within 10% of the resonance frequency and may match the resonance frequency to within 1%. Typical frequencies of operation are from around 100 kHz to 1 or 2 MHz, according to the power requirements of a particular load.

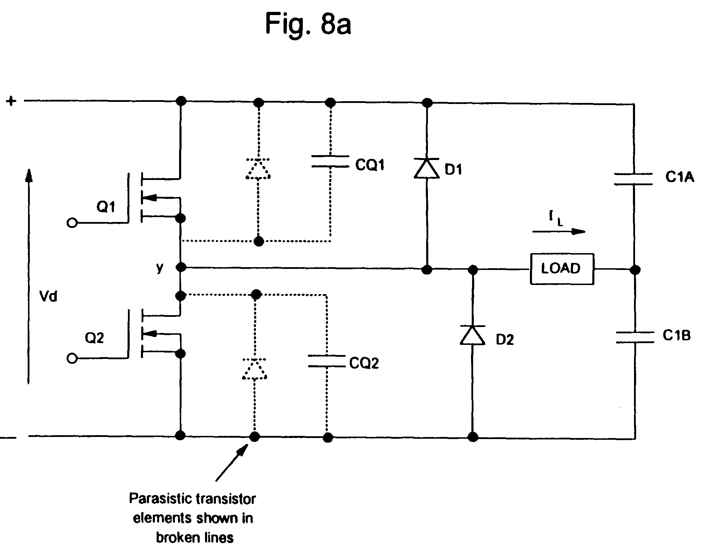

Figure 8a shows in further detail the half bridge inverter 5 of the source unit 1. Parasitic transistor elements are shown in broken lines. The transistor switches in the two arms of the bridge are both power MOSFETs. Suitable devices for a 200 W load are available as model no. IRF 840 manufactured by International Rectifier. Such devices offer high switching speeds but in conventional use suffer the disadvantage of significant power dissipation in the switches.

As conventionally operated, Mosfet switches Q1 and Q2 are driven by anti-phase square wave signals so that the switches conduct alternately. Capacitors C1a and C1b are relatively large so that the voltage at point X remains sensibly constant at Vd/2. This implies that

$$IL/(4fC1) \ll Vd$$

where IL is the load current as shown on the diagram, f is the switching frequency and C1 = C1a = C1b.

Suppose that switch Q1 is conducting and load current is flowing as shown in the diagram.

The parasitic capacitance CQ1 of switch Q1 will be uncharged (voltage across switch effectively = 0) while CQ2 will be charged to Vd.

Now let Q1 be turned off and Q2 be turned on. The voltage at point Y must fall from Vd to effectively zero. CQ1 must charge to voltage Vd while CQ2 must discharge to zero. The charge and discharge currents must flow via Q2 and power dissipation can be high.

When, at the end of the next half cycle of operation, Q2 turns off and Q1 turns on, a similar action occurs but with energy being dissipated by Q1.

In contrast with the mode of operation described above, if the load is highly inductive then, when Q1 is turned off the load current will continue to flow, the driving force being provided by the energy stored in the magnetic field associated with the inductive load. Current transfers from switch Q1 to capacitors CQ1 and CQ2, charging Q1 and discharging Q2. When the voltage at Y falls to just below zero, diode D2 conducts "catching" the voltage at Y and preventing further fall in voltage. Transistor Q2 can now be turned on without power loss since the switching action will occur with diode D2 conducting and, therefore, almost zero voltage across the transistor. The current through the load will then fall to zero at a rate set by the circuit parameters and then reverse in polarity, flowing via Q2.

In systems embodying the present invention, by using a load coupling transformer with low magnetising inductance the magnetising current is made high and operation in the mode just described can be ensured. The circuit therefore operates with near-zero switching losses in Q1 and Q2. The increased magnetising current leads to increased on-state losses in the switches and in the transformer primary winding resistance but this is offset by the reduction in switching loses, especially at high switching frequencies as are used in NCET.

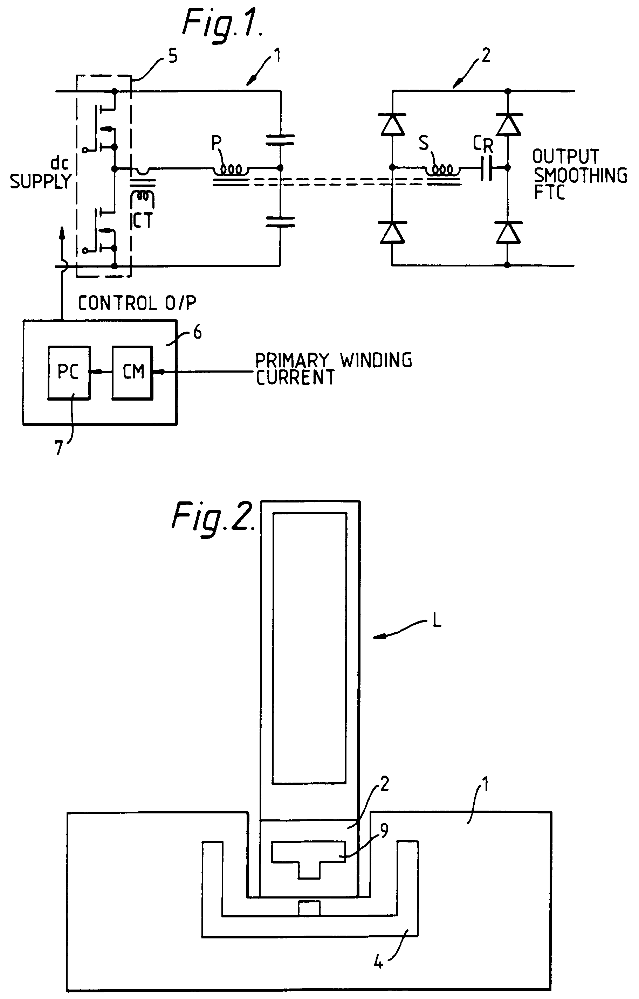

Figure 2 shows one construction for the transformer cores, and the location of the cores in relation to the housing for the source unit and load unit. The use of a shape having a re-entrant portion for one of the cores and a complementary projecting shape for the other of the cores serves to reduce the stray flux as the load and source unit are brought together. This increases the efficiency of the system, and also serves to reduce radio-frequency interference.

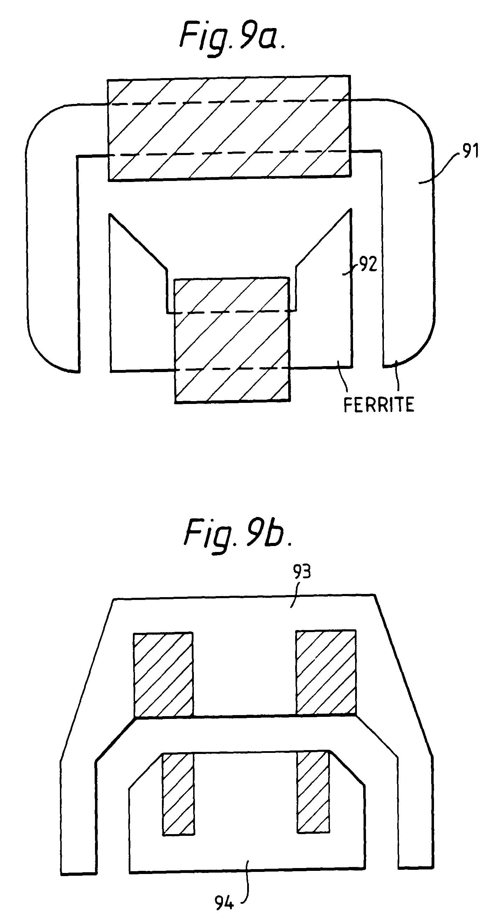

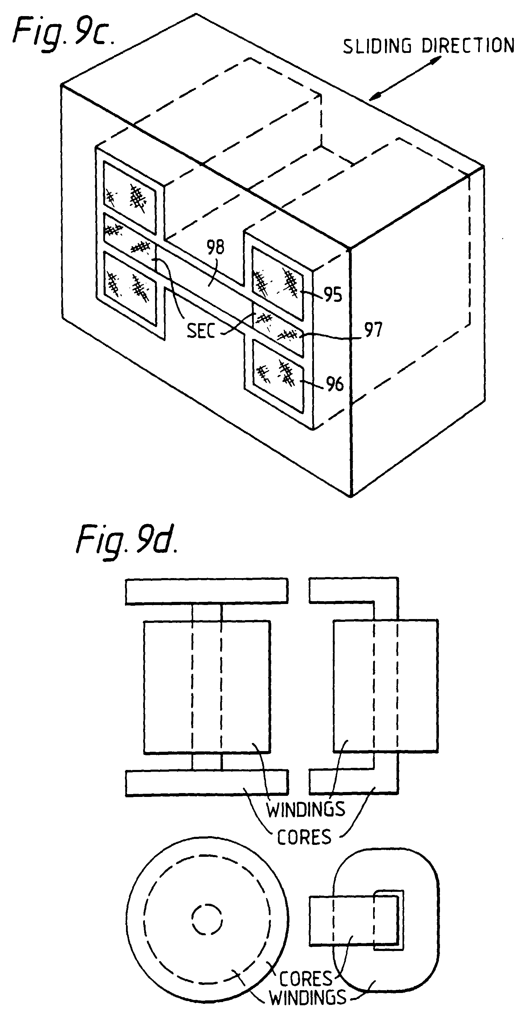

Figures 9a to 9c show further alternative constructions for the transformer cores. Again the shape and configuration of the cores is chosen to maximise the efficiency with which the flux is coupled across the air gap. In Figure 9a, the ferrite core 91 is U-shaped with a winding, indicated by the hatching, formed around the base of the U. The second core 92 is also generally U-shaped but with smaller dimensions than the first core so that it fits within the re-entrant portion of the first core. The tips of the arms of the smaller U-shaped core 92 are cut away as shown in the Figure so that the surface of the arm is closer to the winding on the first core 91 in the region towards the edge of that winding. This serves to increase the uniformity of the field and reduce the flux leakage in that region towards the edge of the winding. Either of the cores may be used as the primary, that is to say for the source unit, but it is preferred to use the smaller core 92 for the source because the source magnetic assembly is then contained by the load assembly and stray field leakage is reduced.

Figure 9b shows another arrangement for the cores. In this example, the cores are generally cylindrical. The first larger core 93 again has a re-entrant portion which receives the second smaller core 94. The arms of the core 93 bounding the re-entrant portion are generally annular in plan. The outer edges of the smaller core 94 and the opposing portions of the larger core 93 are cut away as shown.

In the core structure shown in Figure 9c, a dual E-core structure 95, 96 is used for one of the windings, say the primary, and the other winding 97 on ferrite core 98 is inserted into a slot formed between the two E-cores. This arrangement is particularly suitable for a power coupling systems to be used as a substitute for a conventional plug and socket for users having limited dexterity. The load unit incorporating the secondary winding can then be formed as a simple card or plate which is dropped into the slot provided in the source unit.

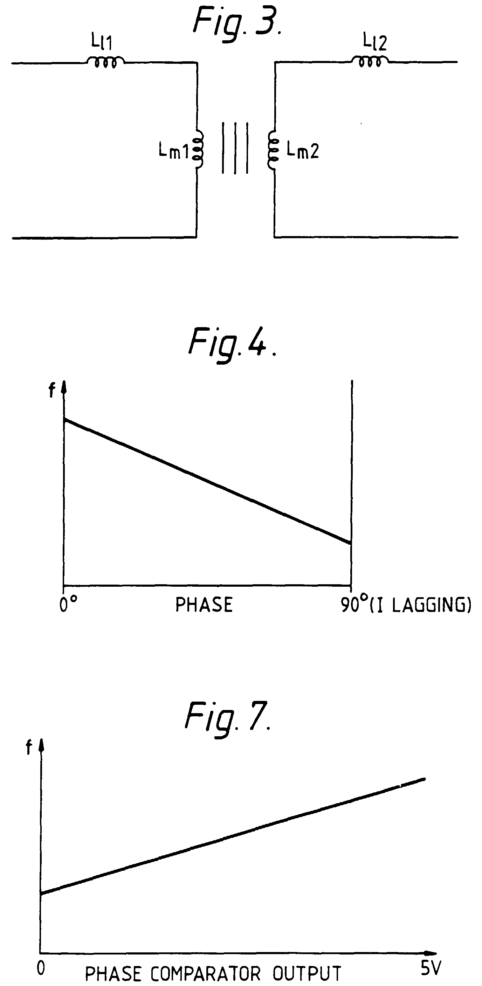

If the transformer comprising the primary and secondary winding is considered as a lumped circuit element as shown in Figure 3, the inductance at the secondary output terminals as seen by the secondary-side circuitry is given by:

$$Lout = Ll2 + Lm2 \text{ in parallel with } Ll1 * \left[\frac{Lm2}{Lm1}\right]^{0.5}$$

$$(1)$$

The secondary winding open-circuit voltage is given by:

$$V2\,(oc) \;=\; \frac{V1\,Lm1}{Lm1+Ll1}\,\sqrt{\left[\frac{Lm2}{Lm1}\right]}$$

$$(2)$$

The resonant frequency of the secondary circuit is:

$$f\,RES = \frac{1}{2\pi\sqrt{LoutCR}} \tag{3}$$

The air-gap between the two parts of the transformer controls the primary and secondary magnetising inductances Lm1 and Lm2 and the leakage inductances Ll1 and Ll2. As the air-gap is changed, the open-circuit secondary voltage, the source impedance presented to the secondary circuit and the resonant frequency of the secondary circuit will all vary.

On the primary side, the low magnetising inductance of the primary winding requires a high magnetising current in phase-quadrature with the applied voltage. If a square-wave drive voltage is employed the current will not only be in quadrature but will be of triangular waveform.

The transformer primary voltage and current are monitored by the source unit control circuitry which includes a phase comparator to provide a signal which is a function of the phase difference between voltage and current. In a first embodiment, this signal is used to modify the operating frequency of the source unit inverter so that the relation is as shown in Figure 4.

The circuit operation is arranged so that if power is applied to the source unit with no load unit present, the inverter operates at a frequency lower than the resonant frequency defined in Equation 3, and with the primary current lagging the applied voltage by, sensibly, 90°. As the load unit is brought near to the source unit, a capacitive impedance is reflected into the primary circuit and the phase difference is reduced. This causes the operating frequency of the inverter to be increased so that it becomes closer to the secondary circuit resonant frequency. In consequence the load circuit driving impedance is reduced. The control circuit adjusts the inverter drive so that operation occurs close to the resonant frequency using an exclusive - OR type phase comparator with the inputs being the sense of the voltage applied to the primary winding (source unit) and the inverse of the sense (polarity) of the primary current. This produces a 50% duty-cycle output when the current lags the voltage by 90° increasing linearly with phase to 100% duty-cycle when the current is in-phase with the voltage. The output of the phase comparator is filtered to produce a dc level which is used as the input to a voltage controlled oscillator (VCO), the output of which controls the power MOSFET switches in the source unit.

In a second embodiment of the control system, operation takes place so that with no load present the frequency at which the primary is driven is higher than the resonant frequency of the load. As before, the magnetising current for square-wave excitation is of triangular wave shape and lags the driving voltage by 90°. The current amplitude required is less than in the first embodiment because of the increased operating frequency. This second embodiment uses an exclusive OR type phase comparator with the inputs being the sense of the voltage applied to the primary winding (source unit) and the sense (polarity) of the primary current. This produces a 50% duty-cycle when the current lags the voltage by 90° decreasing linearly with phase to 0% duty-cycle when the current is in-phase with the voltage. The output of the phase comparator is filtered to produce a dc level to which is used as the input to a voltage controlled oscillator (VCO) the output of which controls the power MOSFET switches in the source unit. The control characteristic for this second embodiment is as shown in Figure 7.

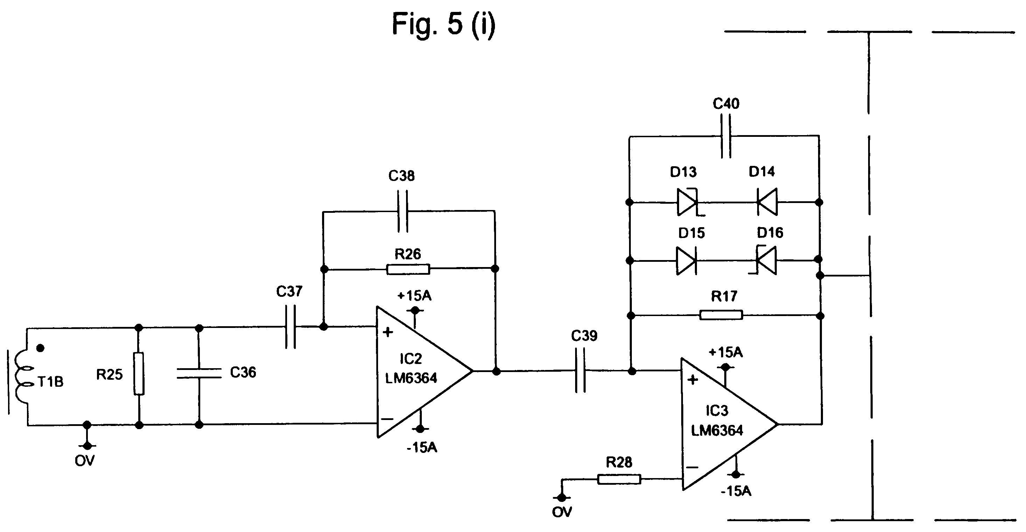

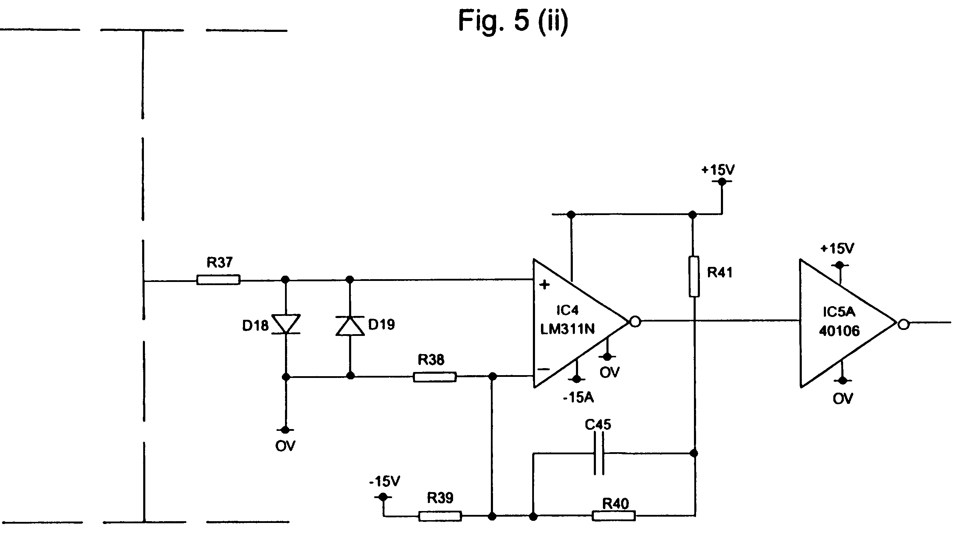

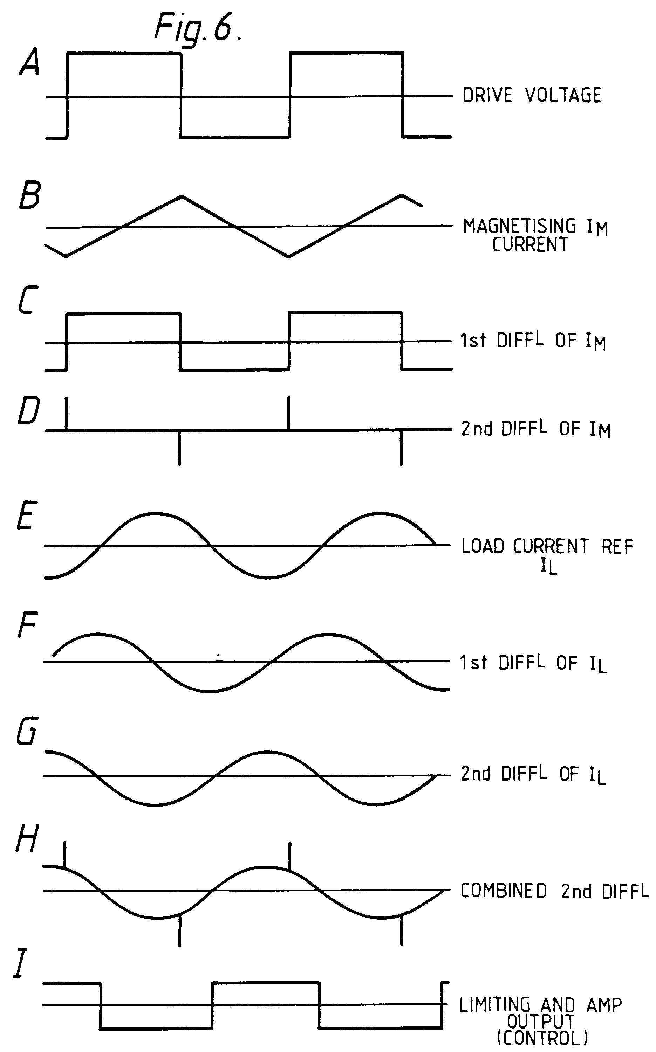

A third embodiment of the control system (Figures 5i and 5ii) includes, in the primary current monitoring circuit, two cascaded differentiator circuits and voltage amplifiers before the phase comparator. Consider with reference to Figure 6 the operation of the circuit with a light load. For the triangular magnetising current component, the first differential will be a square-wave leading the triangular current by 90°. The second differential consists of spikes of alternating polarity leading a further 90° on the current signal. The referred load current signal, being near-sinusoidal, will be unmodified in shape by the differentiators but will undergo phase inversion. The output signal from the differentiator-amplifier system, which will be as shown in Figure 6(H), is fed via a limiting amplifier, Figure 6(I), to the phase comparator together with a signal developed from the drive voltage. The output of the comparator controls the operating frequency of the inverter, moving the frequency towards resonance.

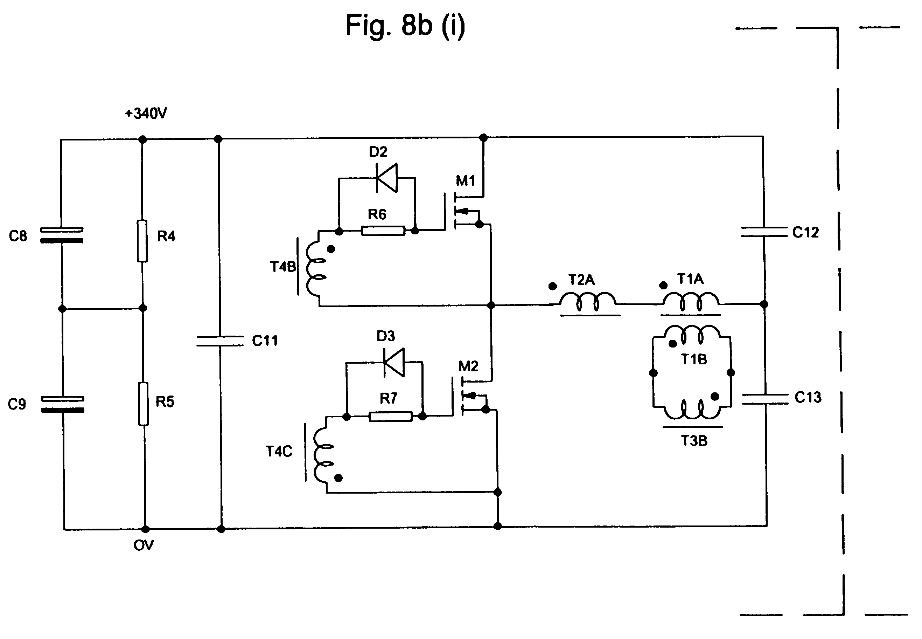

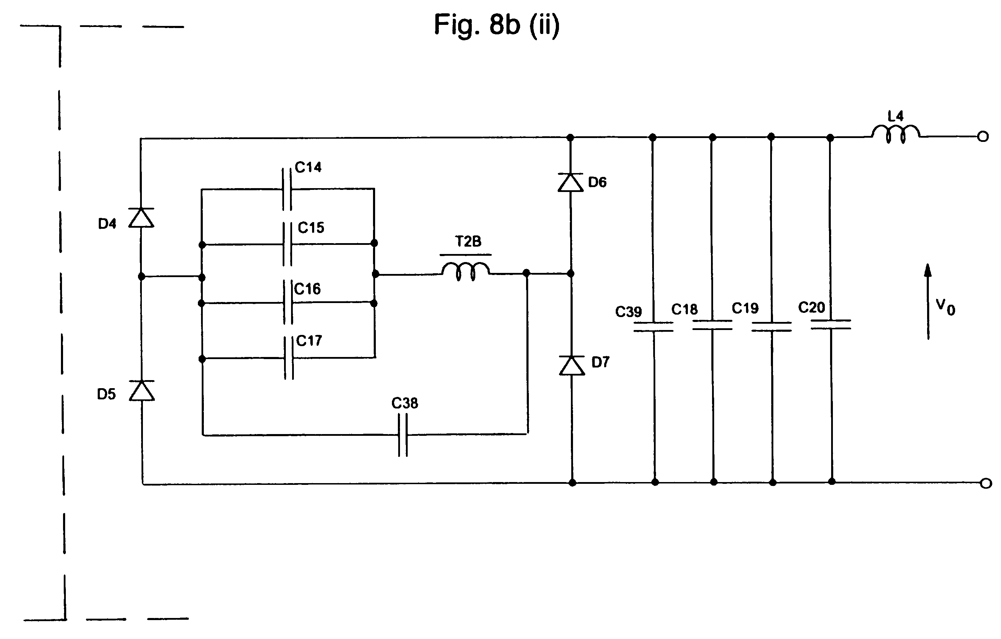

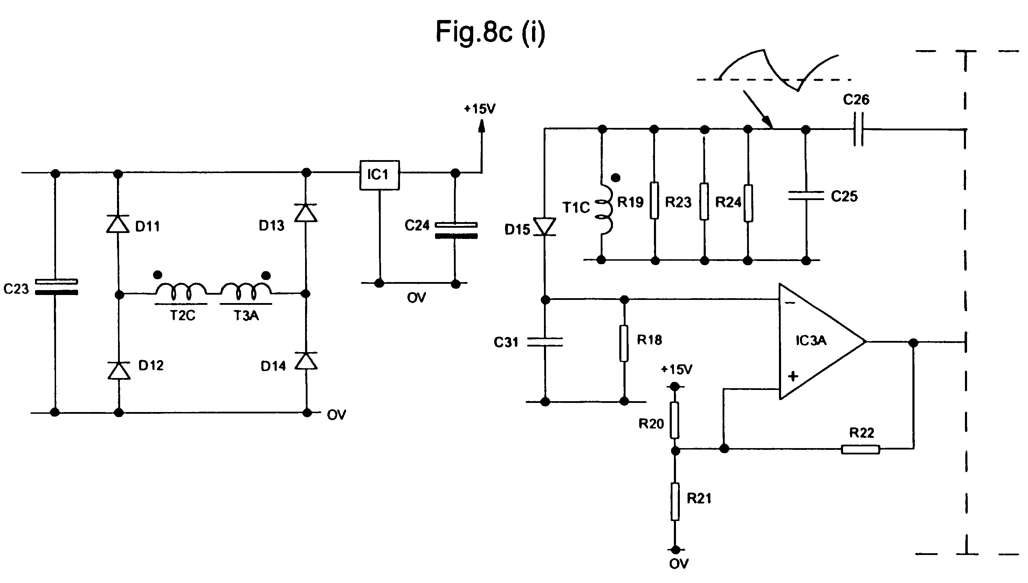

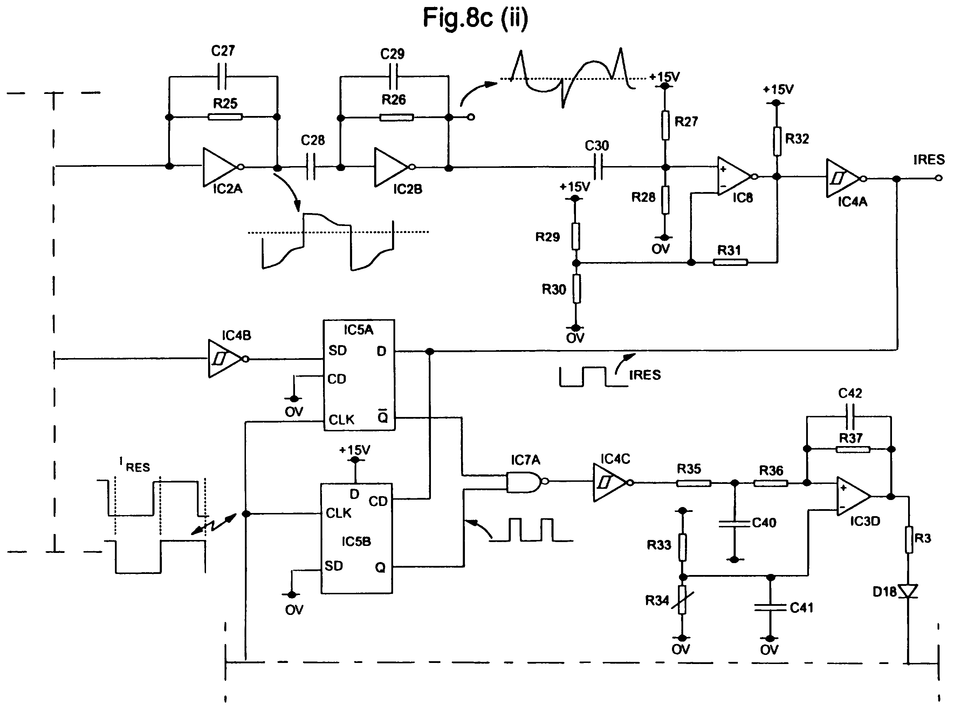

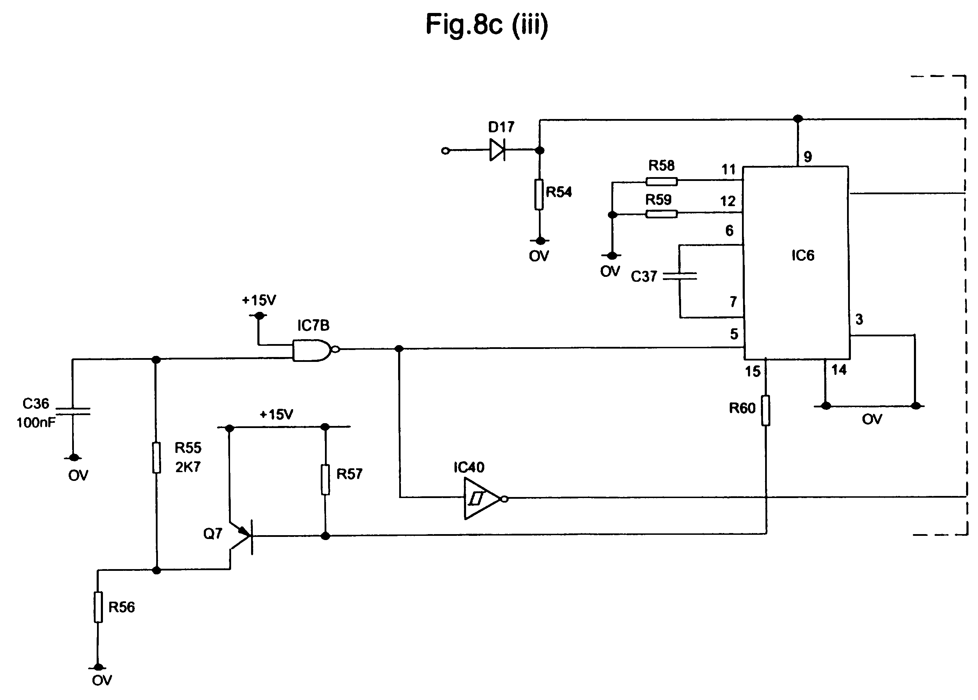

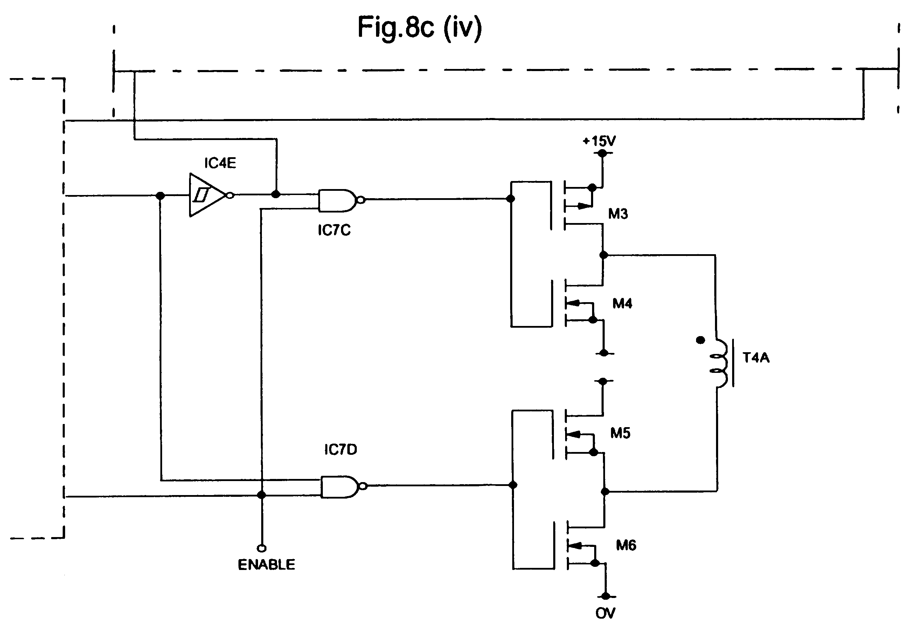

Shown in Figure 8cii is a low cost realisation of the double differentiator circuit which uses CMOS 4069 unbuffered inverters in the linear mode. These devices are taken from the 4000 series of CMOS logic devices. The 4069 used in the linear mode has poor dc performance and requires the output to be ac coupled. The same technique may be used with high performance ac amplifiers/video amplifiers to produce a high frequency (>500 kHz) controller.

The input signal to the cascaded differentiators is taken from winding T1C, (Figure 8ci) which is a current transformer placed in series with the primary winding (see Figure 8b) with auxiliary load current compensation by means of current transformer T3. Resistors R19, R23, R24 and capacitor C25 act as a burden across which a voltage approximately proportional to the primary current is generated. This voltage is used to drive the differentiator circuits. Sketch waveforms are included in Figure 8ci.

The output of the second differentiator (IC2B) is amplified using a voltage comparator and Schmitt-triggered inverter to produce a digital waveform representing the polarity of the secondary (load unit) resonant current. This waveform IRES is applied to the clear direct (CD) input of a D-latch (IC5B) a 4013 device which is gated (Clocked) by the inverted output of the VCO (IC6) of a 4046 CMOS phase-locked-loop. The Q output of IC5B is a pulse train with a duty-cycle dependent upon the phase-lag between the clock (CLK) and Clear Direct (CD) inputs and hence on the phase-lag between the secondary circuit resonant current and the primary voltage. IC5B is used as an edge triggered phase comparator the output of which is zero if the signal applied to the CD input leads that applied to the clock (CLK) input and rises linearly from zero output for in-phase signals to 25% duty-cycle when the signal applied to the CD input lags that applied to the CLK input by 90%.

The D-latch IC5A is used to provide primary side current limiting by forcing the frequency of operation to increase if the sensed primary current exceeds a predetermined threshold. If this occurs the output of IC3A goes low forcing the $\overline{Q}$ output of IC5A low and the output of IC7A high. The $\overline{Q}$ is set back to a logic 1 synchronously with the resonant circuit once the overcurrent condition has been removed.

The output of IC7A (the phase comparator output if not in an overcurrent condition) is buffered and filtered and compared with a pre-set reference. The difference between the filtered output of the phase comparator and the reference is inverted and amplified by IC30D and used to control the VCO in IC6. The output of IC6 is buffered and used to drive transformer T4 which gates the power MOSFETs M1 and M2 shown in Figure 8bi. This example of the third embodiment uses a closed feedback loop with the phase of the resonant circuit current (with respect to the primary voltage) being maintained close to a pre-set level preferably close to zero to provide a low impedance output.

A second input to the VCO may be included using the OR-ing diode D17 shown in Figure 8ciii. This allows a second control-loop to be included which monitors the output voltage and modifies the frequency of oscillation to achieve output regulation; the phase-controlled loop ensuring that operation below resonance does not occur.

The capacitor C38 shown in Figure 8bii may be included to reduce the operating frequency range required to achieve output V regulation for a given load/supply voltage range. C38 changes the power circuit to a parallel loaded circuit at high operating frequencies, giving better control of the output voltage under light load.

Using this approach, it is possible to detect the phase of the referred load current even when it is small compared with the magnetising current. Very light loads are therefore acquired by the primary circuit so that efficient operation at near-resonant frequency occurs for a very wide range of load and coupling conditions.

The control arrangement can adjust the operation of the inverter to suit a wide range of load impedances and air-gaps. When the source unit has acquired the load unit it will operate with air-gaps of 0 to about 10% of the total magnetic path length. Circuit efficiency is high, producing power outputs $\geq 1$ kw at efficiencies greater than 90%, with near-unity power factors, e.g. greater than 94% at 2.5kw output, when operating in this resonant mode and stray magnetic fields are reduced to acceptable levels by appropriate design of the magnetic core components. Power efficiency in this context is defined as the ratio of dc power output in the load to dc power input in the source. When no load is present the primary current is small.

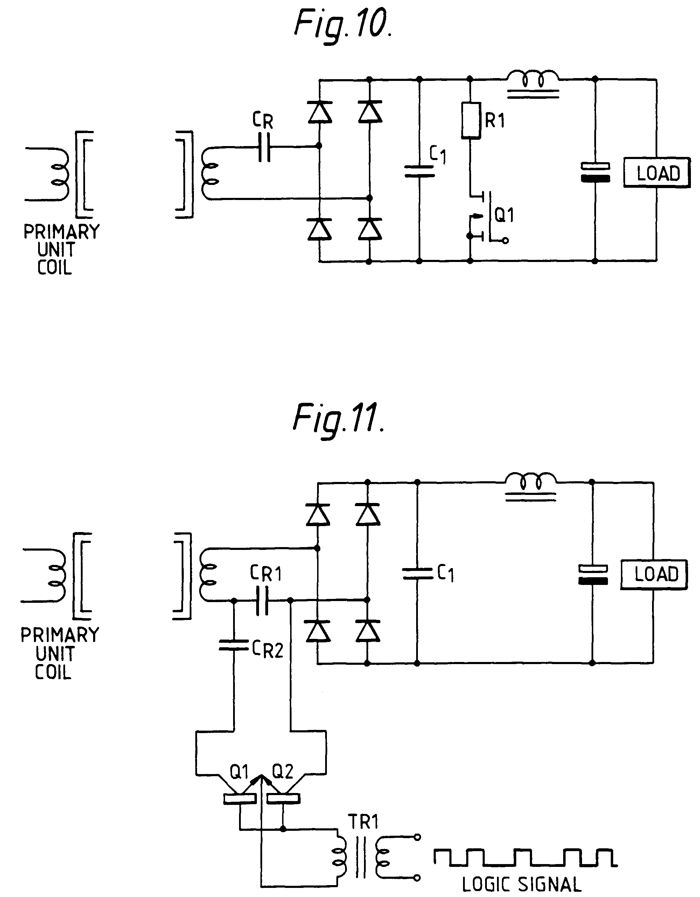

The power coupling circuit may also be used for signalling from the source unit to the load unit. Figure 10 shows a load unit which in this example is designed to provide a DC output. This circuit has been modified to allow information about momentary operation of a switch, that is simple transient logic information, to be transmitted from the load unit to the source unit.

In the secondary circuit, capacitor CR resonates with the secondary-side leakage inductance and wiring parasitic inductance. Capacitor C1 acts as an AC short-circuit and isolates the smoothing inductor L1 from the resonant circuit.

Resistor R1 and transistor Q1 (Q1 is a MOSFET) are added to the output circuit to enable transmission of the signal from load unit to source unit. When Q1 is momentarily turned on, current flows via R1 and Q1, increasing the loading as seen by the primary unit. This increase is arranged, by choice of R1 to be substantially greater than the maximum increase resulting from normal load changes. A simple threshold detector in the source unit is used to sense changes in the current demand within that unit, and thereby to recover information about operation of switch Q1 in the load unit.

One possible use for such an arrangement is the transmission of information relating to the operation of a push-button switch mounted, for example, in a sliding door in a railway carriage. Because of the movement of the door conventional wired connections present considerable problems, and these can be overcome by using an inductive connection with the circuit as described above.

Figure 11 shows a further example of a load circuit modified to allow digital data transmission from the load to the source. Additional components are capacitor CR2, transistors Q1 and Q2, and drive transformer TR1. Q1 and Q2 are again Mosfets. All other components are as in the original circuit described above with reference to Figure 10.

Transistors Q1 and Q2 form a bi-directional switch (Bright switch) which is controlled by the data signal via transformer TR1 which provides signal isolation. With the switch undriven and non-conducting, the secondary resonant circuit consists essentially of capacitor CR1 and the coupling transformer secondary leakage inductance. When the switch conducts, capacitor CR2 is connected in parallel with CR1 and the resonant frequency falls.

The primary (source) unit control circuitry contains a phase-locked loop (PLL) which monitors the phase difference between the primary winding voltage and the secondary winding current as referred to the primary. The PLL produces an output voltage proportional to phase difference which controls the frequency of a voltage-controlled oscillator (VCO) so that the primary unit inverter is driven at the resonant frequency of the secondary circuit.

As the secondary (load) side switch, formed by transistors Q1 and Q2, is operated, the resonant frequency of the secondary circuit changes and the PLL output voltage changes in order to move the drive frequency to the required value. The PLL output voltage is passed, via a filter serving to remove system noise, to a logic output stage and the signals controlling Q1 and Q2 in the secondary unit are thereby recovered in the primary unit. With such a circuit, the maximum data transmission rate is approximately 10% of the lower of the two resonant frequencies of the load circuit.

Load and source units embodying the present invention can be used to provide a universal power coupling system enabling a variety of source voltages and load voltages to be handled using standard components. All that is required for such a set is that the load and source units should operate within a defined maximum power level, in a certain frequency range, and at a certain flux density. The control electronics in each source unit can then be designed to sense the presence of a resonant load circuit tuned in the correct frequency range, and then to adjust the drive frequency of the primary unit inverter to the actual resonant frequency. The ratings of the power stage electronic components would be determined primarily from the power output required and the supply voltage to be used.

The physical size of the magnetic coupling components is chosen with reference to the frequency of operation and the maximum power to be transmitted. In any given source unit, the number of turns forming the primary winding is chosen as a function of the supply voltage, frequency of operation and magnetic circuit dimensions and parameters. A number of different primary units may be constructed to operate, for example, one from a 240V 50Hz supply and another from, say, a 50V DC supply. The units operate at the same frequency and the same magnetic flux density and have magnetic assemblies of the same dimensions. The difference in supply is then "transparent" to the load units which receive the same driving conditions from either source unit.

For the secondary (load) units, the dimensions and number of secondary winding turns are functions of the power level, frequency, flux density, and of the structural dimensions of the source unit. The number of turns on the secondary winding is selected to produce a correct desired output voltage when coupled to the standard AC magnetic field of the source units. A range of secondary units can be designed, all of the same physical dimensions and requiring magnetic fields of the same frequency and strength, but providing different output voltages. When secondary-side power processing electronics is added the range of outputs can be very wide, e.g: 5V @ 50A dc; 100V @ 2.5A dc; 5000V @ 50mA dc; 240V, 50Hz ac.... Since for a given frequency of operation, flux density and physical size and form, any secondary "plug" will correctly couple to any primary "socket" a non-contact plug and socket range can be provided which operates from various input voltages and, if the plug is hard wired to the load, always provides the correct drive voltage for the load.

Such a system of universal connectors may be of particular value for use with underwater power tools. Equally any single load unit/source unit system embodying the present invention can offer significant advantages in this context. Conventional so-called wet-mating assemblies used hitherto require complex sealing systems which exclude the water from contact with the power conductors. With such conventional assemblies it is not safe to mate or separate the connectors with the power turned on. In practice often a key interlock system is used, with a diver having in his possession a key necessary to operate a surface power supply while he makes the physical connection between the plug and socket assemblies, and the diver then having to return to the surface to return the key before the power can be turned on.

All these practical problems can be avoided using the non-contact power transfer system of the present invention. With this system true wet-mating is possible: the load unit and source unit can be mated or separated under water and with the power applied. The physical arrangement for the mating can be a simple clip arrangement and there is no need to exclude water.

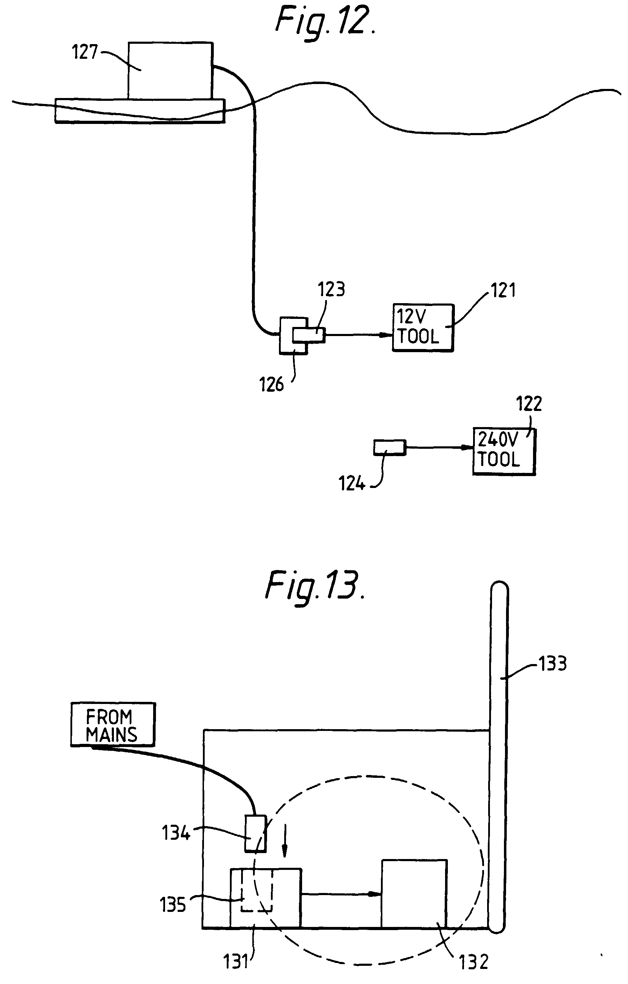

With a set of universal wet-mating connections, there is the further advantage that a range of different tools having different power supply requirements can be plugged in to a single source unit without the user having to ensure correct matching of a particular tool to a particular power source. Thus, in the example shown schematically in Figure 12, a first tool 121 operating at 12V and a second tool 122 operating at 240V both are wired to a respective secondary unit 123, 124 which generates the correct voltage when mated with the source unit 126. Power to the source unit 126 is supplied from a surface generator 127.

A further example of possible fields of use for systems embodying the present invention, is in the provision of connectors for a power supply for charging the battery of an electrically operated wheelchair. Often a user of the wheelchair will have limited strength or dexterity. Accordingly manipulation of a conventional plug and socket for connecting a charger to the wheelchair battery can present considerable difficulties. These difficulties can be overcome by replacing the conventional plug and socket with a non-contact load unit/source unit constructed in accordance with the present invention. The load unit which is a charging circuit 131 for the battery 132 on the wheelchair 133 may include a slotted double-E coil as discussed with respect to Figure 9c above. This provides the "socket" the source unit 134 is the "plug" used to make the connection. This "plug" containing the source coil is card-shaped and is connected to the mains at its remote end. The user then simply has to drop the card into the socket 135 in the load unit to establish a connection to the mains. Alternatively other non-contact assemblies may be used in different configurations.

The tables below show components for Figure 5 and Figure 8 respectively.

TABLE 1

| RESISTORS | | | |
|---|---|---|---|
| R25 | 100Ω | 2% | 0.5W |
| R26 | 15KΩ | 1% | 0.125W |
| R17 | 22KΩ | 1% | 0.125W |
| R28 | 22KΩ | 1% | 0.125W |
| R37 | 10KΩ | 2% | 0.125W |
| R38 | 1KΩ | 2% | 0.125W |
| R39 | 1.5MΩ | 2% | 0.125W |
| R40 | 820KΩ | 2% | 0.125W |
| R41 | 1KΩ | 2% | 0.125W |
| **CAPACITORS** | | | |
| C36 | 2n2 | 10% | CERAMIC |
| C37 | 150pF | 2% | CERAMIC |
| C38 | 8.2pF | 0.25P | CERAMIC |
| C39 | 47pF | 2% | CERAMIC |
| C40 | 8.2pF | 0.25P | CERAMIC |

TABLE 1   (continued)

| CAPACITORS | | | |
|---|---|---|---|
| C45 | 10pF | 2% | CERAMIC |
| **DIODES** | | | |
| D14, D15, D18, D19 | | 1N4148 | |
| D13, D16 | | BZX79C6V2 | |
| **INTEGRATED CIRCUITS** | | | |
| IC2 | LM6364 | IC4 | LM311N |
| IC3 | LM6364 | IC5 | 40106 |

TABLE 2

| Ref | Value | Tolerance | Limits |
|-----|-------|-----------|--------|
| R3 | 10K | 2% | 0.125W |
| R4 | 100K | 5% | 1W |
| R5 | 100K | 5% | 1W |
| R6 | 47 | 5% | 0.25W |
| R7 | 47 | 5% | 0.25W |
| R18 | 10K | 5% | 0.125W |
| R19 | 33 | 2% | 0.125W |
| R20 | 10K | 2% | 0.125W |
| R21 | 1K5 | 2% | 0.125W |
| R22 | 820K | 5% | 0.125W |
| R23 | 33 | 2% | 0.125W |
| R24 | 33 | 2% | 0.125W |
| R25 | 47K | 2% | 0.125W |
| R26 | 47K | 2% | 0.125W |
| R27 | 10K | 1% | 0.125W |
| R28 | 10K | 1% | 0.125W |
| R29 | 10K | 1% | 0.125W |
| R30 | 10K | 5% | 0.125W |
| R31 | 100K | 5% | 0.125W |
| R32 | 1K | 5% | 0.25W |
| R33 | 10K | 5% | 0.125W |
| R34 | 10K | POT | |
| R35 | 10K | 2% | 0.125W |
| R36 | 10K | 2% | 0.125W |
| R37 | 150K | 2% | 0.125W |
| R54 | 10K | 2% | 0.125W |
| R55 | 2K7 | 2% | 0.125W |
| R56 | 1K | 5% | 0.5W |
| R57 | 10K | 5% | 0.125W |
| R58 | 15K | 2% | 0.125W |
| R59 | 100K | 2% | 0.125W |
| R60 | 10K | 5% | 0.125W |
| R61 | 18K | 2% | 0.125W |
| R62 | 10K | 2% | 0.125W |

| Ref | Value | Tolerance | Limits | Comments |
|-----|-------|-----------|--------|----------|
| R63 | 10k | 2% | 0.125W | |
| R64 | 10K | 2% | 0.125W | |
| R65 | 15K | 2% | 0.125W | |
| R66 | 1K | 5% | 0.25W | |
| R67 | 1K | 5% | 0.125W | |
| R68 | 330 | 5% | 0.5W | |
| R69 | 100 | 5% | 0.5W | |
| R70 | 10K | 5% | 0.125W | |
| R71 | 10K | 5% | 0.125W | |
| R72 | 10K | 5% | 0.125W | |
| C8 | 470$\mu$F | | 200V | >1A ripple current |
| C9 | 470$\mu$F | | 200V | >1A ripple current |
| C11 | 1$\mu$F | | 630V | Siemens MkP |
| C12 | 0.22$\mu$F | | 400V | Siemens MkT |
| C13 | 0.22$\mu$F | | 400V | Siemens MkT |
| C14 | 15nF | | 2kV | Philips 378 Series |
| C15 | 15nF | | 2kV | Philips 378 Series |
| C16 | 15nF | | 2kV | Philips 378 Series |
| C17 | 15nF | | 2kV | Philips 378 Series |
| C18 | 2$\mu$2F | | 250V | Philips 378 Series |
| C19 | 2$\mu$2F | | 250V | Philips 378 Series |
| C20 | 2$\mu$2F | | 250V | Philips 378 Series |
| C23 | 22$\mu$F | | 35V | |
| C24 | 10$\mu$F | | 16V | Tantalum |
| C25 | 1nF | 5% | | Ceramic |
| C26 | 33pF | 2% | | Philips 680 Series |
| C27 | 2p2F | 0.25pF | | Philips 680 Series |
| C28 | 33pF | 2% | | Philips 680 Series |
| C29 | 2p2F | 0.25pF | | Philips 680 Series |
| C30 | 100nF | | | |
| C31 | 1nF | | | |
| C36 | 100nF | 10% | | Ceramic |
| C37 | 330pF | 5% | | Ceramic |
| C38 | 47nF | | 1kV | Philips 378 Series |
| C39 | 100nF | | | Ceramic |

| Ref | Value | Tolerance Limits | Comments |
|---|---|---|---|
| C40 | 100nF | 10% | Ceramic |
| C41 | 100nF | | Ceramic |
| C42 | 33pF | | Ceramic |
| D2 | | | 1N4148 |
| D3 | | | 1N4148 |
| D4 | | 45V | 80SQ045 |
| | | | Fitted for low volt-dp and 175°C junction temperature |
| D5 | | | 80SQ045 |
| D6 | | | 80SQ845 |
| D7 | | | 80SQ845 |
| D11 | | | UF4001 |
| D12 | | | UF4001 |
| D13 | | | UF4001 |
| D14 | | | UF4001 |
| D15 | | | 1N4148 |
| D17 | | | 1N4148 |
| D18 | | | 1N4148 |
| M1 | | 500V | IRF840 |
| M2 | | 500V | IRF840 |
| M3 | | 20V | ZVP2106A |
| M4 | | 20V | ZVN2106A |
| M5 | | 20V | ZVN2106A |
| M6 | | 20V | ZVN2106A |
| Q7 | | | BC556 |

| Ref | Comments |
|---|---|
| IC1 | 78M150.5A+15V regulator |
| IC2 | 4000 Series 4069 inverter |
| IC3 | LM324 op-amp |
| IC4 | 4000 Series 40106 inverter |
| IC5 | 4000 Series 4013 D-latch |
| IC6 | 4000 Series 4046 phase-lock loop |
| IC7 | 4000 Series 4093 NAND |
| IC8 | LM311 comparator |

```
L4          50µH differential-mode choke
T1          1:1:30 current transformer wound on Philips 3C85
            U10 core using 0.315mm enamelled copper wire
T2          Power transformer
T3          3:20 current transformer wound as T1
T4          48:48:48 gate drive transformer wound on Philips
            3C85 U10 core using 0.224mm enamelled copper wire
```

## Claims

1. A power coupling system comprising a source unit (1) arranged to be connected to a power supply and including a first winding (P) and a load unit (2) including a second winding (S) connected in a resonant circuit, in use power being inductively coupled from the first winding to the second winding, and the source unit (1) and load unit (2) being readily separable,
   characterised by a variable tuning circuit arranged to control the frequency of the voltage applied to the first winding in dependence upon the resonant frequency of the load circuit including the secondary winding leakage inductance, so that an AC voltage applied to the first winding (P) is tuned to the said resonant frequency of the load circuit.

2. A power coupling system according to claim 1, in which the tuning circuit (6) includes a phase-locked loop responsive to the phase difference between the source unit voltage and the load unit current as referred to the source unit and arranged to control the frequency of the AC voltage accordingly.

3. A power coupling system according to claim 2, in which the source unit (1) includes an inverter (5) switched at a frequency determined by the tuning circuit.

4. A power coupling system according to claim 3, in which each arm of the inverter includes a field-effect transistor (FET) (Q1, Q2, Fig 8), each FET being arranged to be turned on when the voltage across the FET is substantially zero.

5. A power coupling system according to any one of claims 1 to 4, in which the tuning circuit (6) is arranged to drive the source unit circuit at a high frequency in the absence of a load,and to reduce the frequency as the load approaches.

6. A power coupling system according to any one of the preceding claims, in which one winding (P) is formed on a core (4) having a re-entrant portion and the core (9) for the other winding has at least one part which is dimensioned to fit within the re-entrant portion of the core as the load and source units are brought together.

7. A power coupling system according to claim 6, in which both the source core (4) and the load core (9) are generally U-shaped.

8. A power coupling system according to claim 6, in which both the source core (93) and the load core (94) are generally cylindrical, with one of the cores (93) including a generally annular extension defining the re-entrant portion.

9. A power coupling system according to any one of the preceding claims, in which one of the source and load windings (P,S) is positioned around a slot for receiving the other of the source and load windings (P,S).

10. A power coupling system according to any one of the preceding claims, in which the resonant circuit in the load unit (2) includes a switched component (R1. Fig. 10) which, when connected in the resonant circuit, changes the resonant frequency of the circuit, in use, the source unit (1) detecting the change in resonant frequency of the load unit (2), the switching of the switch component thereby being used to transmit a signal from the load to the source.

11. A power coupling system according to claim 10, in which the switch (Q1, Q2, Fig. 11) for the switched component is responsive to a pulsed data stream, the load unit thereby transmitting data to the source unit.

12. A power coupling system according to any one of claims 1 to 11, in which the tuning circuit (6) includes a differentiator arranged to detect the phase of a quasi-sinusoidal component of the source unit winding current.

13. A power coupling system according to any one of the preceding claims, in which the source unit (1) and load unit (2) are sealed within respective water-tight housings.

14. A power coupling system according to any one of the preceding claims in which one of the load and source units (2,1) is mounted for rotation and the other is fixed.

15. A power coupling system according to claim 14 in which one of the windings (P,S) is formed on a bobbin-shaped core which in use rotates about its central axis.

16. A power coupling system according to claim 15, in which the other core is generally U-shaped.

17. A power coupling system according to any one of claims 1 to 13, in which the load units (2) is mounted on a first member and the source unit (1) is mounted on a second member, and in which the first and second members are slidable with respect to each other.

18. A power coupling system comprising a source unit (1) and a plurality of load units (2) arranged to be coupled individually to the source unit (1), the source unit (1) and load unit (2) together forming a system in accordance with any one of the preceding claims, different load units (2) being individually coupled to the source unit (1) to provide different respective drive voltages.

19. A system according to claim 14, including a plurality of source units (1), each source unit (1) being arranged to be connected to a different respective power supply and to generate a common standard coupling field for the load units (2).

20. A power coupling system comprising a plurality of source units (1) and load unit (2) arranged to be coupled to any one of the source units (1), any one of the source units (1) and the load unit (2) together forming a system in accordance with any one of claims 1 to 17, the plurality of source units (1) being arranged to be connected to different respective power supplies, and to generate a common standard coupling field for the load unit (2).

21. A method of coupling power inductively from a source to a load including bringing separable respective source and load units (1,2) into proximity, the load winding (5) being connected in a resonant circuit characterised by tuning automatically the frequency of operation of the source unit to match the resonant frequency of the load including the load winding (5) leakage inductance.

## Patentansprüche

1. Ein Energiekopplungssystem, bestehend aus einer Quelleneinheit (1), die mit einer Stromversorgungseinheit verbunden ist und eine Primärwicklung (P) enthält, weiterhin bestehend aus einer Lasteinheit (2), die eine Sekundärwicklung (S) enthält und an einen Resonanzstromkreis angeschlossen ist, dazu verwendet, Energie durch induktive Kopplung von der Primär- zur Sekundärwicklung zu übertragen, wobei die Quelleneinheit (1) und die Lasteinheit (2) leicht voneinander zu trennen sind,
gekennzeichnet durch einen variablen Abstimmkreis, der die Frequenz der auf die erste Wicklung wirkenden Spannung in Abhängigkeit von der Resonanzfrequenz des Lastkreises einschließlich der Streuinduktivität der Sekundärwicklung regelt, so daß die auf die Primärwicklung (P) wirkende Wechselspannung auf die besagte Resonanzfrequenz des Lastkreises abgestimmt wird.

2. Ein Energiekopplungssystem entsprechend Anspruch 1, in dem der Abstimmkreis (6) einen Phasenregelkreis beinhaltet, der auf die Phasenverschiebung zwischen der Spannung an der Quelleneinheit und dem Strom an der Lasteinheit in Bezug zur Quelleinheit reagiert und so aufgebaut ist, daß er die Frequenz der Wechselspannung entsprechend regelt.

3. Ein Energiekopplungssystem entsprechend Anspruch 2, in dem die Quelleneinheit (1) einen Wechselrichter (5) enthält, der auf die vom Abstimmkreis determinierte Frequenz geschaltet ist.

4. Ein Energiekopplungssystem entsprechend Anspruch 3, in dem jeder Arm des Wechselrichters einen Feldeffekttransistor (FET) (Q1, Q2, Abb. 8) enthält, wobei jeder FET so angeordnet und aufgebaut ist, daß er sich einschaltet, wenn die an ihm anliegende Spannung im wesentlichen Null beträgt.

5. Ein Energiekopplungssystem entsprechend einem der Ansprüche 1 bis 4, in dem der Abstimmkreis (6) den Stromkreis der Quelleinheit beim Fehlen von Last mit einer hohen Frequenz versorgt und diese Frequenz verringert, wenn eine Last angelegt wird.

6. Ein Energiekopplungssystem entsprechend einem der vorstehenden Ansprüche, in dem eine Wicklung (P) auf einem Kern (4) mit einem wiedereintrittsinvarianten Teil ausgeführt ist und der der anderen Wicklung zugeordnete Kern (9) über mindestens ein Teil verfügt, das in den wiedereintrittsinvarianten Teil des Kerns paßt, wenn die Last- und die Quelleneinheit zusammengebracht werden.

7. Ein Energiekopplungssystem entsprechend Anspruch 6, in dem sowohl der Kern der Quelleneinheit (4) als auch der Kern der Lasteinheit (9) im allgemeinen U-förmig sind.

8. Ein Energiekopplungssystem entsprechend Anspruch 6, in dem sowohl der Kern (93) der Quelleneinheit als auch der Kern (94) der Lasteinheit im allgemeinen zylinderförmig sind, wobei einer der Kerne (93) mit einer im allgemeinen ringförmigen Erweiterung versehen ist, die den wiedereintrittsinvarianten Teil definiert.

9. Ein Energiekopplungssystem entsprechend einem der vorstehenden Ansprüche, in dem entweder die Wicklung der Quelleneinheit oder die Wicklung der Lasteinheit (P, S) an einem Spalt positioniert ist, um jeweils entweder die Wicklung der Quellen- oder der Lasteinheit aufzunehmen (P, S).

10. Ein Energiekopplungssystem entsprechend einem der vorstehenden Ansprüche, in dem der Resonanzstromkreis in der Lasteinheit (2) eine Schaltkomponente (R1, Abb. 10) enthält, die beim Anschluß an den Resonanzkreis die Resonanzfrequenz des Stromkreises ändert, dazu die Quelleneinheit (1) nutzt, durch die Veränderung der Resonanzfrequenz der Lasteinheit (2) erkannt wird, wobei die Schaltung der Schaltkomponente hierbei zur Übertragung eines Signals von der Last zur Quelle verwendet wird.

11. Ein Energiekopplungssystem entsprechend Anspruch 10, in dem der Schalter (Q1, Q2, Abb. 11) der Schaltkomponente auf einen Impuls-Datenstrom reagiert, wodurch die Lasteinheit Daten zur Quelleneinheit überträgt.

12. Ein Energiekopplungssystem entsprechend einem der vorstehenden Ansprüche 1 bis 11, in dem der Abstimmkreis einen Differentiator enthält, der so angeordnet und aufgebaut ist, daß er die Phase einer quasi sinusförmigen Komponente des Stroms der Quelleneinheit erkennt.

13. Ein Energiekopplungssystem entsprechend einem der vorstehenden Ansprüche, in dem die Quelleneinheit (1) und die Lasteinheit (2) in entsprechenden wasserdichten Gehäusen eingeschlossen sind.

14. Ein Energiekopplungssystem entsprechend einem der vorstehenden Ansprüche, in dem entweder die Last- oder die Quelleneinheit (2, 1) drehbar und die jeweils andere Einheit fest angebracht ist.

15. Ein Energiekopplungssystem entsprechend einem der vorstehenden Ansprüche, in dem eine der Wicklungen (P, S) auf einem spulenförmigen Kern ausgeführt ist, der sich bei Verwendung um seine Zentralachse dreht.

16. Ein Energiekopplungssystem entsprechend Anspruch 15, in dem einer der Kerne im allgemeinen U-förmig ist.

17. Ein Energiekopplungssystem entsprechend einem der Ansprüche 1 bis 13, in dem die Lasteinheiten (2) auf einem ersten Bauelement und die Lasteinheit (1) auf einem zweiten Bauelement angebracht ist und in dem das erste und das zweite Bauelement gegeneinander verschiebbar sind.

18. Ein Energiekopplungssystem, das eine Quelleneinheit (1) und mehrere Lasteinheiten (2) enthält, die so angeordnet und aufgebaut sind, daß sie einzeln an die Quelleneinheit (1) angekoppelt werden können, wobei die Quelleneinheit (1) und die Lasteinheit (2) ein System entsprechend einem der vorstehenden Ansprüche bilden, wobei verschiedene Lasteinheiten (2) einzeln an die Quelleneinheit (1) gekoppelt sind, um jeweils verschiedene Steuerspannungen zu erzeugen.

19. Ein System entsprechend Anspruch 14, das mehrere Quelleneinheiten (1) enthält, die so angeordnet und aufgebaut sind, daß sie jeweils an eine andere Stromquelle angeschlossen werden können und somit ein übliches Standard-Kopplungsfeld für die Lasteinheiten (2) erzeugen.

20. Ein Energiekopplungssystem, das mehrere Quelleneinheiten (1) und eine Lasteinheit (2) enthält, die so angeordnet und aufgebaut sind, daß sie an eine der Quelleneinheiten (1) angekoppelt werden können, wobei eine der Quelleneinheiten (1) und die Lasteinheit (2) gemeinsam ein System entsprechend der Ansprüche 1 bis 17 bilden, wobei die Mehrzahl der Quelleneinheiten (1) so angeordnet und aufgebaut ist, daß sie jeweils an andere Stromquellen angeschlossen werden können und somit ein übliches Standard-Kopplungsfeld für die Lasteinheit (2) erzeugen.

21. Ein Verfahren zur induktiven Kopplung von Energie von einer Quelle zu einer Last, bei dem voneinander trennbare Quellen- bzw. Lasteinheiten (1, 2) in Annäherung gebracht werden, wobei die Wicklung der Lasteinheit (5) an einen Resonanzstromkreis angeschlossen ist, der dadurch gekennzeichnet ist, daß er automatisch die Betriebsfrequenz der Quelleneinheit auf die Resonanzfrequenz der Lasteinheit einschließlich der Streuinduktivität der Lastwicklung (5) abstimmt.

## Revendications

1. Système de couplage de puissance comprenant une unité (1) formant source agencée pour être connectée à une source d'alimentation et comportant un premier enroulement (P) et une unité (2) formant charge comportant un second enroulement (S) connecté dans un circuit résonnant, la puissance, lors de l'utilisation, étant couplée de manière inductive entre le premier enroulement et le second enroulement, et l'unité (1) formant source et l'unité (2) formant charge étant aisément séparables,
   caractérisé par un circuit d'accord variable agencé pour commander la fréquence de la tension appliquée au premier enroulement en fonction de la fréquence de résonance du circuit de charge comportant l'inductance de fuite de l'enroulement secondaire, de telle sorte que la tension alternative appliquée au premier enroulement (P) est accordée à ladite fréquence de résonance du circuit de charge.

2. Système de couplage de puissance selon la revendication 1, dans lequel le circuit d'accord (6) comporte une boucle à verrouillage de phase sensible au déphasage entre la tension de l'unité formant source et le courant de l'unité formant charge qui se réfère à l'unité formant source et agencée pour commander la fréquence de la tension alternative en conséquence.

3. Système de couplage de puissance selon la revendication 2, dans lequel l'unité (1) formant source comporte un onduleur (5) commuté à une fréquence déterminée par le circuit d'accord.

4. Système de couplage de puissance selon la revendication 3, dans lequel chaque branche de l'onduleur comporte un transistor à effet de champ (FET) (Q1, Q2, figure 8), chaque FET étant agencé pour être conducteur lorsque la tension aux bornes du FET est sensiblement nulle.

5. Système de couplage de puissance selon l'une quelconque des revendications 1 à 4, dans lequel le circuit d'accord (6) est agencé pour exciter le circuit de l'unité formant source à une fréquence élevée en l'absence de charge, et pour réduire la fréquence lorsque la charge se rapproche.

6. Système de couplage de puissance selon l'une quelconque des revendications précédentes, dans lequel un enroulement (P) est formé sur un noyau (4) ayant une partie rentrante et le noyau (9), pour l'autre enroulement, comporte au moins une partie qui est dimensionnée pour s'adapter dans la partie rentrante du noyau lorsque les unités formant charge et source se rapprochent.

7. Système de couplage de puissance selon la revendication 6, dans lequel, à la fois le noyau (4) de source et le noyau (9) de charge, ont une forme générale en U.

8. Système de couplage de puissance selon la revendication 6, dans lequel, à la fois le noyau (93) de source et le noyau (94) de charge sont généralement cylindriques, l'un (93) des noyaux comportant un prolongement généra-

EP 0 700 574 B1

lement annulaire définissant la partie rentrante.

9. Système de couplage de puissance selon l'une quelconque des revendications précédentes, dans lequel l'un des enroulements (P, S) de source et de charge est positionné autour d'une fente destinée à recevoir l'autre des enroulements (P, S) de source et de charge.

10. Système de couplage de puissance selon l'une quelconque des revendications précédentes, dans lequel le circuit résonnant, dans l'unité (2) formant charge, comporte un composant commuté (R1, figure 10) qui, lorsqu'il est connecté dans le circuit résonnant, modifie la fréquence de résonance du circuit, lors de l'utilisation, l'unité (1) formant source détectant la modification de la fréquence de résonance de l'unité (2) formant charge, à la suite de quoi la commutation du composant commutateur est utilisée pour transmettre un signal entre la charge et la source.

11. Système de couplage de puissance selon la revendication 10, dans lequel le commutateur (Q1, Q2, figure 11) pour le composant commuté est sensible à un flux de données d'impulsion, à la suite de quoi l'unité formant charge transmet des données à l'unité formant source.

12. Système de couplage de puissance selon l'une quelconque des revendications 1 à 11, dans lequel le circuit d'accord (6) comporte un circuit différentiateur agencé pour détecter la phase de la composante quasi-sinusoïdale du courant de l'enroulement de l'unité formant source.

13. Système de couplage de puissance selon l'une quelconque des revendications précédentes, dans lequel l'unité (1) formant source et l'unité (2) formant charge sont scellées dans des boîtiers respectifs étanches à l'eau.

14. Système de couplage de puissance selon l'une quelconque des revendications précédentes, dans lequel l'une des unités (2, 1) formant charge et source est montée pour tourner et l'autre est fixe.

15. Système de couplage de puissance selon la revendication 14, dans lequel l'un des enroulements (P, S) est formé sur un noyau en forme de bobine qui, lors de l'utilisation, tourne autour de son axe central.

16. Système de couplage de puissance selon la revendication 15, dans lequel l'autre noyau a une forme générale en U.

17. Système de couplage de puissance selon l'une quelconque des revendications 1 à 13, dans lequel l'unité (2) formant charge est montée sur un premier élément et l'unité (1) formant source est montée sur un second élément, et dans lequel le premier et le second éléments peuvent glisser l'un par rapport à l'autre.

18. Système de couplage de puissance comprenant une unité (1) formant source et une pluralité d'unités (2) formant charge agencées pour être couplées individuellement à l'unité (1) formant source, l'unité (1) formant source et l'unité (2) formant charge formant ensemble un système conforme à l'une quelconque des revendications précédentes, les différentes unités (2) formant charge étant couplées individuellement à l'unité (1) formant source pour obtenir différentes tensions d'excitation respectives.

19. Système selon la revendication 14, comportant une pluralité d'unités (1) formant source, chaque unité (1) formant source étant agencée pour être connectée à une source d'alimentation différente respective et pour générer un champ de couplage standard commun pour les unités (2) formant charge.

20. Système de couplage de puissance comprenant une pluralité d'unités (1) formant source et une unité (2) formant charge agencée pour être couplée à l'une quelconque des unités (1) formant source, l'une quelconque des unités (1) formant source et l'unité (2) formant charge formant ensemble un système conforme à l'une quelconque des revendications 1 à 17, la pluralité d'unités (1) formant source étant agencées pour être connectées à différentes sources d'alimentation respectives, et pour générer un champ de couplage standard commun pour l'unité (2) formant charge.

21. Procédé de couplage de puissance de manière inductive entre une source et une charge comportant le rapprochement d'unités séparables respectives (1, 2) formant source et charge, l'enroulement (5) de charge étant connecté dans un circuit résonnant caractérisé par l'accord automatique de la fréquence de fonctionnement de l'unité formant source pour s'adapter à la fréquence de résonance de la charge comportant l'inductance de fuite de l'enroulement (5) de charge.

17

## Fig.1.

dc SUPPLY

P

S   CR

OUTPUT SMOOTHING FTC

ICT

CONTROL O/P

PC   CM

PRIMARY WINDING CURRENT

## Fig.2.

L

## Fig. 3.

$L_{l1}$          $L_{l2}$

$L_{m1}$          $L_{m2}$

## Fig. 4.

f

0°          PHASE          90°(I LAGGING)

## Fig. 7.

f

0          PHASE COMPARATOR OUTPUT          5V

Fig. 5 (i)

C40

D14 D16

D13 D15

R17

C38

R26

C37

C36

R25

T1B

IC3
LM6364
+15A
−15A
+
−

IC2
LM6364
+15A
−15A
+
−

C39

R28

OV

OV

Fig. 5 (ii)

Fig.6.

A — DRIVE VOLTAGE

B — MAGNETISING $I_M$ CURRENT

C — 1st DIFFL OF $I_M$

D — 2nd DIFFL OF $I_M$

E — LOAD CURRENT REF $I_L$

F — 1st DIFFL OF $I_L$

G — 2nd DIFFL OF $I_L$

H — COMBINED 2nd DIFFL

I — LIMITING AND AMP OUTPUT (CONTROL)

# Fig. 8a

Parasistic transistor
elements shown in
broken lines

EP 0 700 574 B1

Fig. 8b (i)

EP 0 700 574 B1

EP 0 700 574 B1

# Fig.8c (i)

EP 0 700 574 B1

Fig.8c (ii)

Fig.8c (iii)

EP 0 700 574 B1

Fig.8c (iv)

EP 0 700 574 B1

# Fig.9a.

FERRITE

# Fig.9b.

30

Fig. 9c.

SLIDING DIRECTION

98

95

SEC

97

96

Fig. 9d.

WINDINGS

CORES

CORES

WINDINGS

# Fig.10.

PRIMARY
UNIT
COIL

CR
R1
C₁
Q1
LOAD

# Fig.11.

PRIMARY
UNIT
COIL

CR1
CR2
C₁
Q1   Q2
TR1
LOAD
LOGIC SIGNAL

## Fig.12.

## Fig.13.